# EUROPÄISCHE PATENTSCHRIFT

(11) **EP 2 480 725 B1**
(45) Veröffentlichungstag und Bekanntmachung des Hinweises auf die Patenterteilung: **13.12.2017**
(21) Anmeldenummer: 10755179.8
(22) Anmeldetag: 21.09.2010
(51) Int. Cl.: E02B 3/12

(54) **WASSERDICHTE MEMBRAN**
Waterproof membrane
Membrane étanche à l'eau

(30) Priorität: 21.09.2009 EP 09170834
(43) Veröffentlichungstag der Anmeldung: 01.08.2012
(60) Teilanmeldung: 17199296.9
(73) Patentinhaber: Sika Technology AG, 6340 Baar (CH)
(72) Erfinder: KNEBEL, Gustl, 6204 Sempach (CH); ECKL, Martin, 8330 Pfäffikon (CH)
(74) Vertreter: Sika Patent Attorneys
(86) Internationale Anmeldenummer: PCT/EP2010/063895
(87) Internationale Veröffentlichungsnummer: WO 2011/033122

(56) Entgegenhaltungen:
- EP-A1- 0 671 510
- WO-A1-00/22059
- WO-A1-2006/053737
- CH-A- 304 643
- US-A- 4 065 924
- US-A- 5 543 188

## Beschreibung

### Technisches Gebiet

Die Erfindung geht aus von einer wasserdichten Membran umfassend eine Schottschicht und eine Kontaktschicht nach dem Oberbegriff des ersten Anspruches.

Die Erfindung geht weiter aus von einem Verfahren zur Abdichtung von Untergründen sowie einem Verfahren zur Herstellung einer wasserdichten Membran.

### Stand der Technik

Zur Abdichtung von Untergründen gegen Wasserdurchstoss sind in der Baubranche wasserdichte Membranen bekannt. Beispielsweise beschreibt US 4065924 eine Schottschicht verbunden mit einer Oberschicht, wobei die Schottschicht auf dem Untergrund angeordnet ist und die Oberschicht den Verbund mit dem aufgetragenen Beton gewährleistet, indem sie von dem aufgetragenen Beton durchsetzt wird.

Der Nachteil solcher Abdichtungen ist jedoch, dass sich im Laufe ihrer Verwendung zwischen der Oberschicht und der Schottschicht Hohlräume bilden können, typischerweise durch das Ablösen der Schichten voneinander durch Materialermüdung. Dies kann zu Hohlräumen führen, durch die sich Flüssigkeiten ausbreiten können. Im Falle eines Lecks in der Schottschicht, beispielsweise durch hineinwachsende Wurzeln, Materialermüdung oder durch Zug- oder Scherkräfte, kann eindringendes Wasser die Schottschicht durch diese zusammenhängenden Hohlräume hinterlaufen. Dadurch werden einerseits grosse Bereiche von eingedrungenem Wasser betroffen und andererseits ist die genaue Lokalisierung des Lecks schwierig.

### Darstellung der Erfindung

Aufgabe der vorliegenden Erfindung ist es daher, eine wasserdichte Membran der eingangs genannten Art zu verbessern, eine hohe Hinterlaufsicherheit zu gewährleisten, den Verbund der wasserdichten Membran mit dem Beton zu verbessern sowie das Eindringen von Wasser im Falle eines möglichen Lecks zu erschweren, respektive das Vorhandensein eines Lecks nachweisen zu können.

Erfindungsgemäss wird dies durch die Merkmale des ersten Anspruches erreicht.

Die Vorteile der Erfindung sind unter anderem darin zu sehen, dass das Haftmittel einen guten Verbund von Kontaktvermittler und Schottschicht gewährleistet. Dies verhindert beispielsweise Zwischenräume zwischen Schottschicht und Kontaktvermittler und erschwert das Hinterlaufen der wasserdichten Membran im Falle eines Lecks in der Schottschicht. Weiter erlaubt die Verwendung des Haftmittels die Benutzung einer grossen Vielfalt an Materialien bei der Herstellung der wasserdichten Membran, insbesondere bei der Wahl des Kontaktvermittlers und die Verwendung von mit Wasser quellbaren oder elektrisch leitfähigen Materialien.

Insbesondere durch eine Herstellung der wasserdichten Membran, bei welcher die einzelnen Schichten durch Haftmittel, welches typischerweise im Pulverstreuverfahren auf die betreffenden Schichten aufgebracht wird, miteinander verbunden werden, kann die erwähnte Vielfalt an Materialien erreicht werden.

Es ist besonders zweckmässig, wenn die wasserdichte Membran mit Wasser quellfähige Materialien und/oder elektrisch leitfähige Materialien aufweist, welche zwischen Kontaktvermittler und Schottschicht angeordnet sind. Typischerweise sind vorhergehend genannte Materialien beidseitig von einer Schottschicht umgeben und damit in Abwesenheit eines Lecks vor Feuchtigkeit geschützt. Durch das mit Wasser quellfähige Material kann die Grösse der vom eingedrungenen Wasser hinterlaufenen Bereiche eingeschränkt werden, im Idealfall wird das Leck durch das Aufquellen des Materials verschlossen. Der Schaden durch das eingedrungene Wasser wird dadurch auf einen kleineren Bereich beschränkt. Die Verwendung von elektrisch leitfähigem Material erlaubt den Nachweis und gegebenenfalls die

Lokalisierung eines Lecks. Durch die Verwendung der vorgehend genannten Materialien lässt sich die Schadensstelle leichter lokalisieren. Dies ist beispielsweise für das Beheben der Schadensstelle mit einer Rissinjektion besonders vorteilhaft.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Es zeigen:
Fig. 1 - Fig. 3 Querschnitte durch wasserdichte Membranen.
Fig. 4 Schematische Darstellung einer möglichen Herstellanlage einer wasserdichten Membran.
Fig. 5 - Fig. 10 Weitere Querschnitte durch wasserdichte Membranen.

Es sind nur die für das unmittelbare Verständnis der Erfindung wesentlichen Elemente gezeigt.

### Wege zur Ausführung der Erfindung

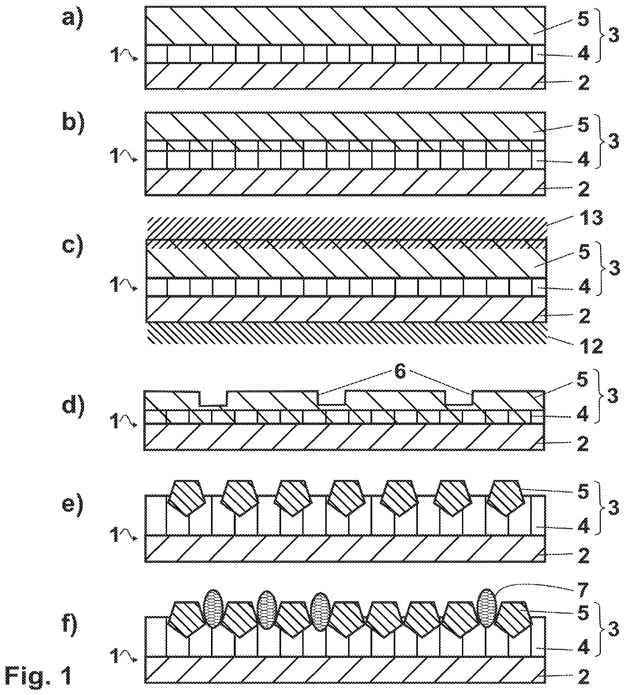

In der Figur 1a ist eine wasserdichte Membrane 1 dargestellt, umfassend eine Schottschicht 2 und eine Kontaktschicht 3, wobei die Kontaktschicht 3 mindestens ein Haftmittel 4 sowie Kontaktvermittler 5 aufweist.

Als Haftmittel 4 kommen alle Materialien in Frage, welche geeignet sind, den Verbund des Kontaktvermittlers 5 mit der wasserdichten Membran 1 zu gewährleisten. Weiter kommen als Haftmittel 4 alle Materialien in Frage, welche geeignet sind, den Verbund der verschiedenen Komponenten der wasserdichten Membran 1 untereinander zu gewährleisten. Der Term "Komponenten" umfasst in diesem Dokument insbesondere (falls vorhanden) Schottschicht, Kontaktvermittler, elastische Partikel, quellfähige Materialien, elektrisch leitfähige Materialien, Gleitschicht und Zwischenschicht.

Typischerweise ist der Kontaktvermittler 5 mittels Haftmittel 4 anhaftend mit der Schottschicht 2 verbunden. Der Term "anhaftend" beschreibt in diesem Dokument sowohl "aufgrund chemischer beziehungsweise physikochemischer Wechselwirkung gebunden" als auch "aufgrund von mechanischer Wechselwirkung gebunden". So wird beispielsweise ein Thermoplast, welcher in geschmolzenem Zustand in Faser-Poren oder - Zwischenräume eindringt und anschliessend erstarrt und sich so mit oder in der Faser verankert, als anhaftend bezeichnet. Das Haftmittel 4 ist zwischen Kontaktvermittler 5 und Schottschicht 2 angeordnet. Es kann jedoch auch von Vorteil sein, wenn das Haftmittel teilweise oder vollständig, bevorzugt teilweise in den Kontaktvermittler eindringt, wie das in Figur 1b gezeigt ist.

Weiter ist es von Vorteil, wenn das Haftmittel 4 im alkalischen pH-Bereich, insbesondere bedingt durch den Beton, chemisch beständig ist und seine Verbundfunktion wahrnehmen kann. Weiter ist es vorteilhaft, wenn das Haftmittel eine hohe Beständigkeit gegen mögliche Zusatzstoffe der eindringenden Flüssigkeit im Falle eines Lecks in der Schottschicht 2 aufweist. Solche Zusatzstoffe sind typischerweise Salze, insbesondere bei salzwasserhaltigem Grundwasser, Calciumhydroxid, schwefelhaltige Verbindungen sowie Lösungsmittel.

Vorteilhafterweise ist das Haftmittel 4 ein bei Raumtemperatur fester Thermoplast oder ein bei Raumtemperatur festes thermoplastisches Elastomer. Unter dem Begriff "Raumtemperatur" wird im vorliegenden Dokument eine Temperatur von 23°C verstanden. Thermoplastische Elastomere haben den Vorteil, dass das Haftmittel 4 dadurch über eine gute Elastizität gegenüber Horizontal- und Vertikalverschiebungen, insbesondere bei Verschiebungen der Schottschicht 2 gegenüber der Kontaktschicht 3, verfügt. Eine gute Elastizität des Haftmittels verhindert ein Reissen oder Ablösen der Schichten und somit ein Versagen des Haftmittels. Idealerweise weist das Haftmittel eine Reissfestigkeit σ_{B} von 1.5 - 20 MPa bei Raumtemperatur auf und/oder eine Reissdehnung ε_{R} von 5 - 1000 %, beide gemessen nach DIN ISO 527.

Als thermoplastische Elastomere werden in diesem Dokument Kunststoffe verstanden, welche die mechanischen Eigenschaften von vulkanisierten Elastomeren mit der Verarbeitbarkeit von Thermoplasten vereinen. Typischerweise sind derartige thermoplastische Elastomere Block-Copolymere mit Hart- und Weichsegmenten oder so genannte Polymerlegierungen mit entsprechend thermoplastischen und elastomeren Bestandteilen.

Bevorzugte Thermoplaste und thermoplastische Elastomere sind insbesondere ausgewählt aus der Gruppe bestehend aus Polyethylen (PE), Polyethylen mit tiefer Dichte (LDPE), Ethylen/Vinylacetat-Copolymer (EVA), Polybuten (PB); thermoplastische Elastomere auf Olefinbasis (TPE-O, TPO) wie Ethylen-Propylen-Dien/Polypropylen-Copolymere; vernetzte thermoplastische Elastomere auf Olefinbasis (TPE-V, TPV); thermoplastische Polyurethane (TPE-U, TPU) wie TPU mit aromatischen Hartsegmenten und Polyester-Weichsegmenten (TPU-ARES), Polyether-Weichsegmenten (TPU-ARET), Polyester- und Polyether-Weichsegmenten (TPU-AREE) oder Polycarbonat-Weichsegmenten (TPU-ARCE); thermoplastische Copolyester (TPE-E, TPC) wie TPC mit Polyester-Weichsegmenten (TPC-ES), Polyether-Weichsegmenten (TPC-ET) oder mit Polyester- und Polyether-Weichsegmenten (TPC-EE); Styrol-Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymer (TPS-SEBS), Styrol/Ethylen-Propylen/Styrol-Block-Copolymer (TPS-SEPS); und thermoplastische Copolyamide (TPE-A, TPA).

Weitere vorteilhafte Haftmittel 4 sind Haftmittel, welche ausgewählt sind aus der Gruppe bestehend aus Acrylatverbindungen, Polyurethanpolymeren, Silan-terminierten Polymeren und Polyolefinen.

Bevorzugte Acrylatverbindungen sind insbesondere Acrylatverbindungen auf Basis von Acryl-Monomeren, insbesondere von Acryl- und Methacrylsäureestern.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Es ist weiter von Vorteil, wenn das Haftmittel 4 ein Schmelzklebstoff ist. Dies gewährleistet einen guten Verbund und eine gute Haftung des Haftmittels auf der Schottschicht 2, respektive auf möglichen Komponenten der wasserdichten Membran, und vermindert somit das Ablösen des Haftmittels.

Schmelzklebstoffe sind dem Fachmann allgemein bekannt und sind beschrieben in CD Römpp Chemie Lexikon, Version 1.0, Georg Thieme Verlag, Stuttgart, 1995.

Des Weiteren ist es von Vorteil, wenn das Haftmittel 4 einen Schmelzpunkt (bestimmt nach der Ring & Kugel-Methode) von 50 - 190°C, insbesondere von 60 - 120°C, bevorzugt von 70 - 90°C, aufweist. Dies ist insbesondere für die Herstellung von wasserdichten Membranen 1 vorteilhaft, bei denen Materialien für Schottschicht 2 und/oder Kontaktvermittler 5 verwendet werden, die bei hohen Herstellungstemperaturen in Mitleidenschaft gezogen werden.

Die Kontaktschicht 3 umfasst neben dem Haftmittel 4 weiter einen Kontaktvermittler 5. Bevorzugt ist der Kontaktvermittler 5 an der Oberfläche einer der beiden Flächen der wasserdichten Membran 1 angeordnet.

Der Kontaktvermittler 5 kann aus allen Materialien bestehen, welche von flüssigem Beton 14 gut durchdrungen werden und/oder mit flüssigem Beton 14 reagieren und/oder mit dem erhärteten Beton einen guten Verbund ausbilden. Figur 1c zeigt eine wasserdichte Membran, deren Kontaktvermittler teilweise von Beton 13 durchdrungen ist.

Der Kontaktvermittler 5 kann also eine im Wesentlichen feste Verbindung mit Beton 13 eingehen, wenn besagter Beton vor seiner Aushärtung mit dem Kontaktvermittler in Kontakt gebracht wird.

Es ist vorteilhaft, wenn der Kontaktvermittler 5 ein poröses Material umfasst. Eine poröse Struktur ist der Elastizität der Kontaktschicht 3 zuträglich, sie kann dadurch besser Zug- und Scherkräfte aushalten. Andererseits führt sie zu einer guten Aufnahme von flüssigem Beton und somit zu einem guten Verbund mit dem flüssigen sowie dem ausgehärteten Beton. Dies kann insbesondere bei grossen Flächenneigungswinkeln von Vorteil sein, damit der Beton nicht auf der Kontaktschicht 3 abrutscht.

Vorzugsweise umfasst oder ist der Kontaktvermittler 5 ein Faserwerkstoff. Unter Faserwerkstoff ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Zwischenräume. Diese Zwischenräume werden durch geeignete Herstellverfahren aufgebaut. Vorzugsweise sind die Zwischenräume zumindest teilweise offen und erlauben das Eindringen von flüssigem Beton und/oder von Haftmittel 4.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind.

Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebauter Körper kann mechanisch verfestigt werden durch Vernadeln, Vermaschen oder durch Verwirbeln mittels scharfer Wasserstrahlen. Besonders bevorzugt als Faserwerkstoff ist ein Filz oder Vlies. Weiter bevorzugt sind Faserwerkstoffe, die eine Maschenzahl (oder Meshzahl) von 5 - 30 pro 10 cm aufweisen. Solche Schichten aus Faserwerkstoffen bieten dieselben Vorteile wie sie vorgehend für die porösen Materialien erwähnt wurden und haben geringe Herstellkosten. Weiter können Faserwerkstoffe in der Regel sehr gleichmässig hergestellt werden, wodurch eine vergleichbare Durchdringung mit Beton erreicht werden kann.

Es ist weiter von Vorteil, wenn die Kontaktschicht 3, insbesondere der Kontaktvermittler 5, die Schottschicht 2 vor mechanischen Belastungen schützen kann. Insbesondere beim Verlegen der wasserdichten Membran 1 und vor und während der Applikation des flüssigen Betons kann es zu starken mechanischen Belastungen kommen, beispielsweise bei Begehung der wasserdichten Membran, durch das Verlegen von Armierungseisen oder beim Anbringen des flüssigen Betons. Es ist daher vorteilhaft, wenn die Verbundschicht 3 ein gewisses Flächengewicht aufweist und somit eine gewisse Druckwiderstandsfähigkeit gegen mechanische Belastungen aufweist. Insbesondere geeignet sind Faserwerkstoffe, insbesondere Filze oder Vliese, mit einem Flächengewicht von 30 - 200, insbesondere von 50 - 120 g/m².

Vorteilhafterweise besteht der Kontaktvermittler 5 aus einem thermoplastischen Material und das Material ist ausgewählt aus der Gruppe umfassend Polyethylen mit hoher Dichte (HDPE), Polyethylenterephthalat (PET), Polystyrol (PS), Polypropylen (PP), Polyvinylchlorid (PVC), Polyamid (PA) und Kombinationen davon.

Es ist weiter vorteilhaft, wenn der Kontaktvermittler 5 eine Prägung 6, insbesondere eine rasterartige Prägung aufweist, wie dies in Figur 1d gezeigt ist. Eine Prägung ist dahingehend von Vorteil, dass dadurch das Haftmittel 4 näher an der Oberfläche der wasserdichten Membran 1 angeordnet sein kann. Dies ist dahingehend von Vorteil, dass dadurch das Haftmittel 4 mit dem flüssige Beton 14 und/oder mit dem erhärteten Beton 13 einen guten Verbund ausbilden kann, insbesondere wenn der Beton und das Haftmittel 4 den Kontaktvermittler 5 durchdringen können.

Die Prägung 6 kann typischerweise eine Tiefe von 0.05 - 1.2 mm, bevorzugt von 0.3 - 0.6 mm aufweisen, der Abstand zwischen den Rillen kann 1 - 20 mm, bevorzugt von 4 - 7 mm, betragen.

Es ist weiter vorteilhaft, wenn der Kontaktvermittler 5 Betonbestandteile und/oder Mörtelbestandteile umfasst. Als Betonbestandteile und/oder Mörtelbestandteile sind prinzipiell alle Stoffe, die für die Herstellung von Beton und/oder Mörtel verwendet werden, geeignet, insbesondere Zementpartikel. Als Betonbestandteile und/oder Mörtelbestandteile sind beispielsweise Zuschlagstoffe, wie Kies oder Sand, oder Bindemittel, wie nichthydraulische, latent hydraulische, puzzolanische und hydraulische Bindemittel, geeignet. Dies ist einer innigen Verbindung der wasserdichten Membran mit dem angegossenen Beton in seiner ausgehärteten Form zuträglich.

Bevorzugt sind Betonbestandteile und/oder Mörtelbestandteile hydraulische Bindemittel, welches vorzugsweise ausgewählt ist aus der Gruppe bestehend aus Zement, Mörtel, Gips, Silikafume, Flugasche und Hüttensand oder eine Mischung davon. Die Betonbestandteile haben typischerweise eine durchschnittliche Partikelgrösse von 0.1 - 1000 µm, bevorzugt 2 - 500 µm.

Der Kontaktvermittler 5 ist typischerweise auf der der Schottschicht 2 abgewandten Seite der Kontaktschicht 3 angeordnet, insbesondere auf der Oberfläche der der Schottschicht 2 abgewandten Seite der Kontaktschicht 3, wie dies in Figur 1e gezeigt ist.

Es kann weiter von Vorteil sein, wenn der Kontaktvermittler ein poröses Material, insbesondere einen Faserwerkstoff, sowie Betonbestandteile umfasst.

Der Kontaktvermittler 5 weist typischerweise eine Dicke von 0.1 - 1 mm, bevorzugt 0.2 - 0.6 mm, insbesondere bevorzugt 0.4 - 0.55 mm auf.

Es ist weiter vorteilhaft, wenn die Kontaktschicht 3 elastische Partikel 7 umfasst, welche eine durchschnittliche Grösse von 0.1 - 1200 µm und ein Elastizitätsmodul bei Raumtemperatur von 1 - 100 MPa aufweisen. Beim Elastizitätsmodul handelt es sich um den Schubmodul gemäss EN ISO 6721-2:2008.

In Figur 1f ist eine erfindungsgemässe wasserdichte Membran gezeigt, welche elastische Partikel 7 aufweist. Die elastischen Partikel 7 sind typischerweise auf der der Schottschicht 2 abgewandten Seite der Kontaktschicht 3 angeordnet, insbesondere auf der Oberfläche der der Schottschicht 2 abgewandten Seite der Kontaktschicht 3.

Die elastischen Partikel 7 sind dahingehend von Vorteil, als dass sie die wasserdichte Membran vor mechanischen Belastungen zu schützen vermögen, da sie Druckbelastungen aufnehmen können. Weiter erfahren sie typischerweise durch den angegossenen und ausgehärteten Beton 13 eine, zumindest teilweise reversible, Volumenreduktion. Der somit aufgebaute Kompressionsdruck führt zu einem Dichtverhalten der elastischen Partikel 7 zwischen Betonschicht 13 und wasserdichter Membran 1.

Besonders bevorzugt sind die elastischen Partikel 7 Elastomere. Unter dem Begriff "Elastomer" werden in diesem Dokument Polymere mit gummielastischem Verhalten, die bei Raumtemperatur wiederholt mindestens auf das Zweifache ihrer Länge gedehnt werden können und nach Aufhebung des für die Dehnung erforderlichen Zwanges sofort wieder annähernd ihre Ausgangslänge einnehmen.

Geeignete Elastomere für elastische Partikel 7 sind Elastomere ausgewählt aus der Liste bestehen aus Acrylatkautschuk (ACM), Polyester-Urethankautschuk (AU), bromierter Butylkautschuk (BIIR), Polybutadien (BR), chlorierter Butylkautschuk (CIIR), chloriertes Polyethylen (CM), Epichlorhydrin (CO), Polychloropren (CR), sulfuriertes Polyethylen (CSM), Ethylen-AcrylatKautschuk (EAM), Epichlorhydrin (ECO), Ethylen-Propylen-Dien-Kautschuk (EPDM), Polyether-Urethankautschuk (EU), Ethylen-Vinylacetat-Copolymer (EVM), Fluorkautschuk (FKM), Fluorsilicon-Kautschuk (FVMQ), hydrierter Nitrilkautschuk (H-NBR), Butylkautschuk (IIR), Dimethylpolysil-oxan (MVQ), Nitrilkautschuk (NBR) und Naturkautschuk (NR).

Die Schottschicht 2 der wasserdichten Membran 1 ist mittels Haftmittel 4 mit der Kontaktschicht 3 verbunden.

Die Schottschicht 2 kann aus allen Materialien bestehen, welche auch bei hohen Flüssigkeitsdrücken eine ausreichende Dichtheit gewährleisten.

Es ist also von Vorteil, wenn die Schottschicht 2 eine hohe Beständigkeit gegen Wasserdruck aufweist, sowie gute Werte in Weiterreissversuchen und Perforationsversuchen zeigt, was besonders bei mechanischen Belastungen auf Baustellen von Vorteil ist.

Es ist insbesondere von Vorteil, wenn die Schottschicht 2 eine Thermoplastschicht, vorzugsweise eine Schicht aus thermoplastischen Polyolefinen oder Polyvinylchlorid (PVC), insbesondere eine Schicht aus Polypropylen (PP) oder Polyethylen (PE), insbesondere bevorzugt aus Polypropylen, aufweist. Daraus resultiert eine hohe Widerstandsfähigkeit gegenüber Umwelteinflüssen.

Vorzugsweise ist die Schottschicht 2 ausgewählt aus Materialien aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polyethylenterephthalat (PET), Polystyrol (PS), Polyvinylchlorid (PVC), Polyamide (PA), Ethylen/Vinylacetat-Copolymer (EVA), chlorsulfoniertes Polyethylen, thermoplastische Elastomere auf Olefinbasis (TPE-O, TPO), Ethylen-Propylen-Dien-Kautschuk (EPDM) und Mischungen davon.

Die Schottschicht 2 kann eine Dicke von 0.05 - 1 mm, bevorzugt 0.06 - 0.5 mm, insbesondere 0.06 - 0.1 mm, aufweisen.

Es ist insbesondere von Vorteil, wenn die Schottschicht 2 und/oder der Kontaktvermittler 5 eine flexible Kunststoffschicht ist. Bevorzugt sind Schottschicht 2 und Kontaktvermittler 5 flexible Kunststoffschichten, dadurch lässt sich beispielsweise die wasserdichte Membran 1, typischerweise bei der Herstellung, zu Rollen aufwickeln und leicht auf einem Untergrund anbringen.

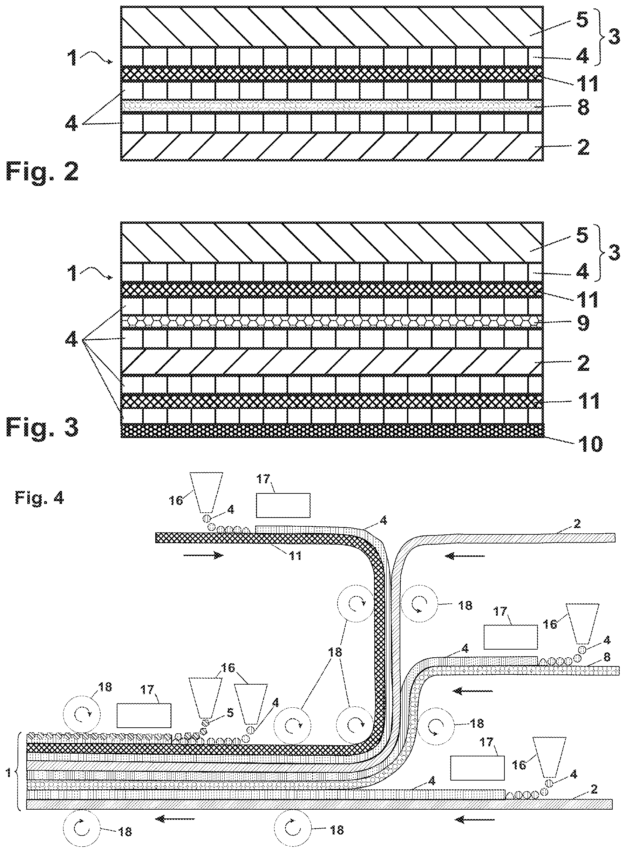

Weiter kann die wasserdichte Membran 1 mit Wasser quellfähige Materialien 8 aufweisen, welche zwischen Kontaktvermittler 5 und Schottschicht 2 angeordnet sind, wie dies in Figur 2 gezeigt ist. Die quellfähige Materialien 8 sind typischerweise durch Materialien, wie sie vorgehend als geeignet für Haftmittel 4 erwähnt wurden, mit der Schottschicht 2 und der Kontaktschicht 3 verbunden. Durch das Quellen der Quellstoffe im Falle des Eindringens von Wasser durch ein Leck in der Schottschicht 2 kann das Leck verschlossen werden und/oder ein Hinterlaufen der wasserdichten Membran verhindert werden. Es ist vorteilhaft, wenn sich das quellfähige Material zwischen zwei Schottschichten 2 angeordnet ist, wodurch das quellfähige Material vor Wasser geschützt ist und nur im Falle eines Lecks mit Wasser in Kontakt kommt. So kann es sich bei der in Figur 2 gezeigten Zwischenschicht 11 um eine zweite Schottschicht handeln, um das quellfähige Material vor Wasser zu schützen. Bei der Zwischenschicht 11 kann es sich aber auch um einen Faserwerkstoff handeln, welcher zusätzlichen Schutz vor mechanischen Belastungen bietet.

Vorteilhafterweise handelt es sich bei den quellfähigen Materialien 8 um quellfähigen Materialien, die bei Kontakt mit Wasser ihr Volumen auf ein mehrfaches vergrössern, typischerweise zwischen 200 - 1000% des ursprünglichen Volumens. Zusätzlich zur Volumenvergrösserung können gewisse quellfähige Materialien auch mit Wasser chemisch reagieren. Beispiele von solchen quellfähigen Materialien sind quellfähigen Materialien auf Polyurethanbasis, insbesondere silanmodifizierte Polymere, die durch Feuchtigkeit zu einem elastischen Produkt aushärten. Ein weiteres Beispiel für quellfähige Materialien sind Bentonit-Butyl-Kautschuke oder die unter dem Namen "Superabsorber" (Superabsorbent Polymers, SAP) zusammengefassten Acrylsäure-basierten Polymere, typischerweise Copolymere aus Acrylsäure und Natriumacrylat, beispielsweise von BASF SE, Deutschland.

In Figur 3 ist ersichtlich, dass die wasserdichte Membran 1 elektrisch leitfähige Materialien 9 aufweisen kann, welche zwischen Kontaktvermittler 5 und Schottschicht 2 angeordnet sind. Die elektrisch leitfähige Materialien 9 sind typischerweise durch Materialien, wie sie vorgehend als geeignet für Haftmittel 4 erwähnt wurden, mit der Schottschicht 2 und der Kontaktschicht 3 verbunden. Durch einen Wechsel in der elektrischen Leitfähigkeit der leitfähigen Materialien 9 im Falle eines Lecks in der Schottschicht und/oder des Eindringens von Flüssigkeit durch ein Leck in der Schottschicht 2 kann das Leck festgestellt und/oder lokalisiert werden.

Vorteilhafterweise handelt es sich bei den elektrisch leitfähigen Materialien 9 um Materialien, die bei Kontakt mit Wasser eine Änderung ihrer elektrischen Leitfähigkeit erfahren oder Materialien, welche in einer Art und Weise angeordnet, respektive ausgebildet sind, dass sie bei Kontakt mit Wasser eine Änderung ihrer elektrischen Leitfähigkeit erfahren.

Beispielsweise können die elektrisch leitfähigen Materialien 9 als Netz ausgebildet sein, wobei eindringendes Wasser die Abstände zwischen dem elektrisch leitfähigen Material zu überbrücken vermag, was zu einer Veränderung in der elektrischen Leitfähigkeit des Netzes führt. Bevorzugt kann ein solches Netz Teil eines Faserwerkstoffs, wie er vorgehend beschrieben wurde, insbesondere in einen solchen eingewebt oder an ein solches angebracht, respektive auf ein solches aufgedruckt, sein.

Einzelne Einheiten des elektrisch leitfähige Material können jedoch auch longitudinal zueinander in der Ebene der wasserdichten Membran angeordnet sein, wobei die Einheiten so nahe nebeneinander angeordnet sein können, dass eine kleine Menge Wasser ausreichend ist, um die beiden zu überbrücken und somit zu einer Veränderung in der elektrischen Leitfähigkeit zu führen.

Es ist jedoch auch möglich, dass die elektrisch leitfähigen Materialien 9 als Kondensator ausgebildet sein, wobei zwischen zwei elektrisch leitenden Flächen ein Bereich mit isolierender Eigenschaft, typischerweise eine Kunststoffschicht, angeordnet ist. Wird der dazwischenlegende Bereich durchtrennt, wie dies beispielsweise bei einem Leck in der wasserdichten Membran der Fall sein kann, kann die Veränderung der Kapazität als Hinweis auf ein Leck verwendet werden.

Es ist vorteilhaft, wenn sich das elektrisch leitfähige Material zwischen zwei Schottschichten 2 angeordnet ist, wodurch das elektrisch leitfähige Material vor Wasser geschützt ist und nur im Falle eines Lecks mit Wasser in Kontakt kommt.

Weiter ist in Figur 3 ersichtlich, dass die wasserdichte Membran 1 auf der der Kontaktschicht 3 abgewandten Seite eine Gleitschicht 10 aufweisen kann. Die Gleitschicht soll ein gutes Gleitverhalten der wasserdichten Membran auf dem Untergrund 12 gewährleisten. Insbesondere wenn es sich bei dem Untergrund um eine vertikal angebrachte Schalung handelt, ist aufgrund des Gewichts der wasserdichten Membran ein gutes Gleitverhalten vorteilhaft. Die Gleitschicht ist auf der der Kontaktschicht 3 abgewandten Oberfläche der wasserdichten Membran 1 angeordnet und weist auf erwähnter Oberfläche typischerweise einen Gleitreibungskoeffizienten (Reibungsbeiwert) auf Beton/Holz von 0.1 - 1.0 µ_{G} auf.

Die Gleitschicht 10 besteht typischerweise aus Faserwerkstoffen, wie sie vorgehend beschrieben wurden.

Weiter kann es von Vorteil sein, wenn bei der wasserdichten Membran 1 zwischen Kontaktvermittler 5 und Schottschicht 2 mindestens eine weitere Schicht angeordnet ist, welche ausgewählt ist aus der Liste bestehend aus Schottschicht 2, Schicht umfassend mit Wasser quellfähiges Material 8, Schicht umfassend elektrisch leitfähiges Material 9 und Schicht umfassend einen Faserwerkstoff, wobei die mindestens eine Schicht beidseitig in Kontakt mit Haftmittel 4 ist.

Es kann ein weiterer Vorteil sein, wenn bei der wasserdichten Membran 1 auf der dem Kontaktvermittler 5 abgewandten Seite der Schottschicht 2 mindestens eine weitere Schicht angeordnet ist, welche ausgewählt sind aus der Liste bestehend aus Schottschicht 2, Schicht umfassend mit Wasser quellfähiges Material 8, Schicht umfassend elektrisch leitfähiges Material 9, Schicht umfassend einen Faserwerkstoff, wobei die mindestens eine Schicht beidseitig in Kontakt mit einem Haftmittel 4 ist.

Insbesondere weist die wasserdichte Membran 1 eine Dicke von 5 - 0.1 mm, insbesondere 3 - 0.5 mm, bevorzugt 2 - 0.8 mm, auf.

Typischerweise weist die wasserdichte Membran:
- Einen Widerstand gegen stossartige Belastungen nach EN 12691:2005 von 800 - 1200 mm auf. Dies ist dahingehend von Vorteil, dass die Membran während und nach der Applikation auf dem Untergrund vor Perforation durch mechanische Belastungen, beispielsweise durch Begehung oder Bewehrungseisen, geschützt ist. Bei einem Wert unter 800 mm bietet die Membran typischerweise nicht genügend Schutz.
- Eine Reissfestigkeit nach EN 12311-2A von 500 - 1000 N/5 cm längs, respektive quer auf. Dies ist dahingehend von Vorteil, dass die Membran dadurch eine gute innere Festigkeit aufweist, und somit sowohl gegenüber dynamischen Belastungen, beispielsweise durch fallende Körper, als auch statischen Belastungen, wie beispielsweise durch Druck oder auf Zug, wie sie typischerweise während und nach der Applikation der Membran auf dem Untergrund vorkommen, geschützt ist. Bei einem Wert unter 500 N/5 cm bietet die Membran typischerweise nicht genügend Schutz, insbesondere bei Temperaturen über 50°C, wie sie im Sommer bei direkter Sonnenbestrahlung auftreten können.
- Eine Reissdehnung nach EN 12311-2A von 40 - 80 % längs, respektive quer auf.
- Eine Wasserdichtigkeit EN 1928 B: 24h bei 5 bar dicht auf. Dies ist dahingehend von Vorteil, dass die Membran dadurch den typischerweise im Tiefbau auftretenden Drücken widerstehen kann. Bei klassischen Basement Anwendungen treten verschiedentlich Wasserdrücke von > 5 bar auf. Bei einem Wert unter 5 bar ist die Schutzfunktion der wasserdichten Membran für die Betonkonstruktion nicht gewährleistet und die wasserdichte Membran stellt sich für den weltweiten Einsatz im Basement als nicht geeignet dar.
- Eine flächenbezogene Masse nach EN 1849-2 von 400 - 800 g/m² auf. Dies ist dahingehend von Vorteil, dass die wasserdichte Membran dadurch den typischerweise im Tiefbau auftretenden Drücken widerstehen kann. Des Weiteren ist es dahingehend von Vorteil, dass die wasserdichte Membran während und nach der Applikation auf dem Untergrund vor Perforation durch mechanische Belastungen, beispielsweise durch Begehung oder Bewehrungseisen, geschützt ist. Des Weiteren ist es dahingehend von Vorteil, dass die wasserdichte Membran während und nach der Applikation ausreichende Witterungsbeständigkeit aufweist. Bei einem Wert unter 400 g/m² ist bietet die wasserdichte Membran typischerweise nicht genügend Schutz. Bei einem Wert über 800 g/m² ist die wasserdichte Membran aus Kostengründen unattraktiv.
- Eine maximale Weiterreisskraft nach EN 12310-2 von 100 - 400 N auf. Dies ist dahingehend von Vorteil, dass allfällige Verletzungen der wasserdichten Membran keine grösseren Folgeschäden nach sich ziehen und die wasserdichte Membran damit ihre Schutzfunktion wahrnehmen kann. Bei einem Wert unter 100 N ist das Risiko von Folgeschäden gegeben.

Es wurden zwei Testmembranen unterschiedlichem Aufbau hergestellt, ihr Aufbau und die gemessenen Eigenschaften sind in Tabelle 1, respektive Tabelle 2 aufgeführt. Die Resultate in Tabelle 2 sind Mittelwerte aus 5 unabhängigen Versuchen.

**Tabelle 1, Aufbau Testmembran**

| **Aufbau Testmembran 1** | **Aufbau Testmembran 2** |
|---|---|
| 1. Vlies aus PP, Flächengewicht 70 g/m² | 1. Vlies aus PP, Flächengewicht 70 g/m² |
| 2. Haftmittel (EVA) | 2. Haftmittel (EVA) |
| 3. PP-Folie 20 µm | 3. PP-Folie 20 µm |
| 4. Haftmittel (EVA) | 4. Haftmittel (EVA) |
| 5. Superabsorber | 5. Vlies (PP), Flächengewicht 60 g/m² |
| 6. Haftmittel (EVA) | 6. Haftmittel (EVA) |
| 7 Vlies (PP), Flächengewicht 60 g/m² | 7. PP Folie 60 µm |
| 8. Haftmittel (EVA) | 8. Haftmittel (EVA) |
| 9. PP Folie 60 µm | 9. Vlies (PP), Flächengewicht 70 g/m² |
| 10. Haftmittel (EVA) | 10. Haftmittel (EVA) |
| 11. Vlies (PP), Flächengewicht 70 g/m² | 11. Vlies (PP), Flächengewicht 30 g/m² |
| 12. Haftmittel (EVA) | |

**Tabelle 2, gemessene Eigenschaften**

| | **Testmembran 1** | **Testmembran 2** |
|---|---|---|
| Widerstand gegen stossartige Belastungen (EN 12691:2005) | 900 mm, 5/5 dicht | 900 mm, 5/5 dicht |
| | 1000 mm, 4/5 dicht | 1000 mm, 4/5 dicht |
| Reissfestigkeit (EN 12311-2A) | 780 N/5cm längs | 900 N/5cm längs |
| | 650 N/5cm quer | 700 N/5cm quer |
| Reissdehnung (EN 12311-2A) | 54 % längs | 59 % längs |
| | 58 % quer | 64 % quer |
| Wasserdichtigkeit (EN 1928 B: 24h bei 5 bar) | dicht | dicht |
| flächenbezogene Masse (EN 1849-2) | 635 g/m² | 660 g/m² |
| maximale Weiterreisskraft (EN 12310-2) | 245 N längs | 232 N längs |
| | 262 N quer | 277 N quer |

Weiter umfasst die Erfindung ein Verfahren zur Herstellung einer vorhergehend erwähnten wasserdichten Membran 1, wobei der Kontaktvermittler 5 durch Haftmittel 4 mit der wasserdichten Membran 1 verbunden wird.

Die wasserdichte Membran 1 kann als Endlosware, beispielsweise durch Extrusion und/oder Kalandrieren und/oder Kaschieren, insbesondere Kaschieren, insbesondere bevorzugt durch Kaschieren mittels Haftmittel 4, hergestellt werden und beispielsweise auf Rollen aufgerollt werden.

Das Haftmittel 4 kann während der Herstellung durch Schlitzdüsenextrusion, im Pulverstreuverfahren, durch Schmelzkalandrieren oder Sprühkaschierung aufgetragen werden, insbesondere im Pulverstreuverfahren. Es ist vorteilhaft, dass das Haftmittel 4 eine Zusammensetzung und eine Standfestigkeit aufweist, die mit den Temperaturen der Herstellung der wasserdichten Membran 1 verträglich ist.

Weiter ist es vorteilhaft, wenn die Komponenten der wasserdichten Membran 1, einzig durch Haftmittel 4 oder einzig durch Kalandrieren, insbesondere einzig durch Haftmittel 4, verbunden werden. Das Verbinden der Komponenten der wasserdichten Membran 1 einzig durch Haftmittel 4 ist dahingehend von Vorteil, weil es das Verbinden von einer Vielzahl von Materialien zulässt, insbesondere solcher, welche aufgrund ihrer chemischen Zusammensetzung untereinander unverträglich wären und/oder sich durch Wärmeeinwirkung, durch Druck, durch physikalische Absorption oder durch jede andere physikalische Krafteinwirkung direkt miteinander nicht oder nur unzureichend fest verbinden lassen.

Figur 4 zeigt eine schematische Darstellung einer möglichen Anlage für die Herstellung einer wasserdichten Membran 1. Gleichzeitig ist hierbei auch ein mögliches Verfahren zu deren Herstellung ersichtlich. Hier wird eine Zwischenschicht 11, typischerweise bestehend aus einem Vlies oder Gewebe, mittels Streuer 16 mit Haftmittel 4, beispielsweise einem thermoplastischen Elastomer auf Olefinbasis (TPE-O, TPO), insbesondere Ethylen/Vinylacetat-Copolymer (EVA), bestreut und anschliessend mittels einer Wärmequelle 17 erhitzt. Bei dem Haftmittel handelt es sich insbesondere um ein Granulat mit einer durchschnittlichen Korngrösse von 1 - 600 µm, bevorzugt 200 - 400 µm, insbesondere bevorzugt 250 - 350 µm. Bei der Wärmequelle handelt es sich typischerweise um einen Infrarot-Sinterkanal und/oder einen Heissluftdüsenkanal. Durch einen Kalander 18, wird die Zwischenschicht 11 mit einer Schottschicht 2, typischerweise eine Schottschicht aus Polyolefinen oder PVC, verbunden. Eine Schicht aus mit Wasser quellfähigen Materialien 8, beispielsweise aus Superabsorber, wird analog zur Zwischenschicht 11 mit Haftmittel 4 beschichtet und über erwähntes Haftmittel 4 auf der der Zwischenschicht 11 abgewandten Seite der Schottschicht 2 mittels einem weiteren Kalander 18 verbunden. Es könnte auch vorteilhaft sein, anstelle einer Schicht aus mit Wasser quellfähigem Material 8 eine Schicht aus elektrisch leitfähigem Material 9 zu verwenden.

Auf der der Schottschicht 2 abgewandten Seite der Schicht aus mit Wasser quellfähigem Material 8 wird danach eine weitere Schottschicht 2 aufgebracht, wobei die weitere Schottschicht mit Haftmittel 4 beschichtet und über erwähntes Haftmittel 4 mit der Schicht aus mit Wasser quellfähigem Material 8 durch einen weiteren Kalander 18 verbunden wird.

Auf der der Schottschicht 2 abgewandten Seite der Zwischenschicht 11 wird danach Haftmittel 4 und Kontaktvermittler 5, typischerweise Betonbestandteile, aufgetragen und mittels Wärmequelle 17 und einem Kalander 18 zu einer wasserdichten Membran 1 verbunden. Danach kann die wasserdichte Membran 1, beispielsweise mittels einer Wickelvorrichtung, zu einer Rolle aufgewickelt werden. Bei den in Figur 4 gezeigten Kalandern 18 handelt es sich typischerweise um Glätt- und Kaschierkalander.

Selbstverständlich ist das gezeigte Herstellungsverfahren und die Herstellanlage nur ein mögliches Ausführungsbeispiel. Es können Schritte zugefügt, durch andere Methoden ersetzt oder weggelassen werden oder in anderer Reihenfolge stattfinden.

Des Weiteren umfasst die Erfindung ein Verfahren zur Abdichtung von Untergründen 12, umfassend die Schritte:
i) Applizieren einer wasserdichten Membran 1 wie vorhergehend erwähnt an einen Untergrund 12, wobei der Kontaktvermittler 5 entgegen dem Untergrund 12 gerichtet ist,
ii) Applizieren von flüssigem Beton 14 auf den Kontaktvermittler 5 der wasserdichten Membran 1.

Unter flüssigem Beton 14 wird in diesem Dokument Beton vor dem Aushärten verstanden. Der Beton 13 kann Teil von einem Bauwerk, insbesondere ein Bauwerk aus dem Hoch- oder Tiefbau wie beispielsweise ein Gebäude, Garage, Tunnel, Deponie, Wasserrückhaltebecken, Deich oder ein Element für den Fertigteilbau sein.

Der flüssige Beton 14 wird üblicherweise auf und/oder an den Kontaktvermittler 5 gegossen, und kann in den Kontaktvermittler eindringen. Es ist insbesondere von Vorteil, wenn der flüssige Beton den Kontaktvermittler 5 vollständig durchsetzt. Nach dem Aushärten des Beton bildet sich typischerweise ein im Wesentlicher fester Verbund zwischen dem ausgehärteten Beton und dem Kontaktvermittler 5 und somit zu der wasserdichten Membran 1, insbesondere wenn der Beton in seinem flüssigen Zustand den Kontaktvermittler 5 vollständig durchsetzt hat.

Es ist jedoch auch von Vorteil, wenn der flüssige Beton 14 den Kontaktvermittler 5 nicht vollständig durchsetzt. Nach dem Aushärten des Beton bildet sich eine der Schottschicht 2 zugewandter Teil des Kontaktvermittlers 5, die nicht von Beton 13 durchsetzt ist, welche dadurch über eine grössere Elastizität gegenüber Horizontal- und Vertikalverschiebungen, insbesondere Verschiebungen der Schottschicht und Kontaktvermittler, als der von Beton durchsetzte Teil des Kontaktvermittlers. Die höhere Elastizität des nicht von Beton durchsetzten Kontaktvermittlers kann dem Reissen oder Ablösen des Haftmittels 4 und/oder der Schottschicht 2 entgegenwirken. Des Weiteren können dadurch Risse im Beton besser überbrückt werden.

Der Untergrund 12 kann dabei waagrecht sein oder auch nicht. Er kann weiterhin das Erdreich, ein Bauwerk oder eine Schalung sein. Typischerweise handelt es sich bei dem Untergrund um eine vertikalpositionierte Schalung aus Holz oder Stahlträgern. Beim Untergrund kann es sich auch um Isolationsmaterial handeln.

Typischerweise beinhaltet das Verfahren zusätzlich einen Schritt zur Befestigung der wasserdichten Membran 1 an dem Untergrund 12. Dieser Schritt findet insbesondere nach dem Anbringen der wasserdichten Membran an dem Untergrund statt, typischerweise durch mechanisches Befestigen und/oder Verkleben.

Des Weiteren umfasst die Erfindung die Verwendung einer wasserdichten Membran 1 wie vorhergehend erwähnt wurde zur Abdichtung von Untergründen 12.

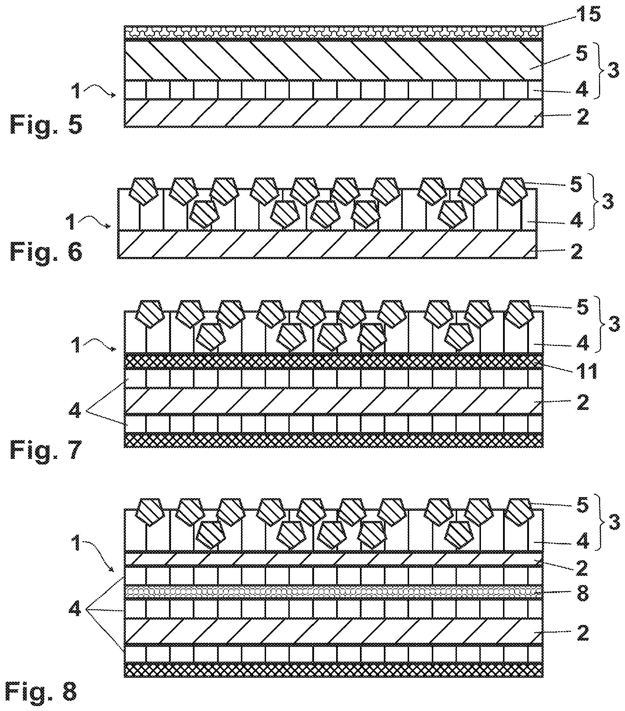

Im Folgenden werden mögliche vorteilhafte Ausführungsformen einer wasserdichten Membran 1 beschrieben. Figur 5 zeigt eine wasserdichte Membran 1 umfassend eine Schottschicht 2, typischerweise aus thermoplastischen Polyolefinen oder Polyvinylchlorid (PVC). Die Kontaktschicht 3 besteht aus einem Kontaktvermittler 5, welcher ein Faserwerkstoff, insbesondere ein Vlies sein kann, und einem Haftmittel 4 umfassend Ethylen/Vinylacetat-Copolymer (EVA). Das Haftmittel kann teilweise in den Kontaktvermittler eingedrungen sein, beispielweise kann der Kontaktvermittler im Haftmittel getränkt sein, oder der Kontaktvermittler ist einseitig mit Haftmittel imprägniert. Der Kontaktvermittler 5 weist eine Maschenzahl (oder Meshzahl) von 5 - 30 pro 10 cm auf. Des Weiteren weist die wasserdichte Membran auf der der Schottschicht 2 abgewandten Seite der Kontaktschicht 3 eine Schutzschicht 15 auf, welche die wasserdichte Membran vor deren Verwendung vor Beschädigung und Qualitätsverminderung schützt und spätestes vor der Applikation des flüssigen Betons 14 auf die wasserdichte Membran 1 entfernt wird. Eine solche Schutzschicht 15 besteht typischerweise aus Thermoplast, insbesondere aus Polypropylen (PP), Polyethylen (PE), oder Polyvinylchlorid (PVC).

Die Herstellung der Ausführungsform aus Figur 5 erfolgt beispielsweise durch Auflaminieren im Transferverfahren des in Haftmittel 4 getränkten oder mit Haftmittel imprägnierten Kontaktvermittlers 5 auf die Schottschicht 2.

Figur 6 zeigt eine wasserdichte Membran 1 umfassend eine chemisch oder physikalisch geschäumte Schottschicht 2 aus thermoplastischen Polyolefinen oder PVC. Die Kontaktschicht 3 besteht aus einem Kontaktvermittler 5, welcher Betonbestandteile umfasst, und einem Haftmittel 4, insbesondere EVA. Die Kontaktschicht 3 hat insbesondere ein Flächengewicht von 100 - 200 g/m². Es ist weiter vorteilhaft, wenn der Kontaktvermittler 5 elastische Partikel 7 umfasst, welche eine durchschnittliche Grösse von 0.1 - 1200 µm und ein Elastizitätsmodul von 1 - 100 MPa aufweisen.

Die Herstellung der Ausführungsform aus Figur 6 erfolgt typischerweise durch Aufbringen des Haftmittel 4 und des Haftvermittlers 5 auf die Schottschicht 2 im Pulverstreuverfahren, wie es beispielsweise in Figur 4 ersichtlich ist. Insbesondere ist es von Vorteil, wenn es sich bei dem Haftmittel 4 um ein Haftmittel handelt, welches für das Pulverstreuverfahren geeignet ist.

Figur 7 zeigt eine wasserdichte Membran 1 umfassend eine Schottschicht 2 aus thermoplastischen Polyolefinen oder PVC. Die Kontaktschicht 3 entspricht der in Figur 6 erwähnten Kontaktschicht. Zwischen Schottschicht und Kontaktschicht befindet sich eine Zwischenschicht 11 bestehend aus einem Vlies oder Gewebe, welches über ein Haftmittel 4, typischerweise EVA, mit der Schottschicht 2 verbunden ist. Auf der der Kontaktschicht 3 abgewandten Seite der Schottschicht 2 ist über ein Haftmittel 4, typischerweise EVA, ein Vlies aus PP an der Schottschicht 2 angebracht.

Die Herstellung der Ausführungsform aus Figur 7 erfolgt typischerweise durch Aufbringen des Vlies aus PP auf der der Kontaktschicht 3 abgewandten Seite der Schottschicht 2 mittels Haftmittel 4 durch Kaschieren, wobei insbesondere das Haftmittel 4 über Pulverstreuverfahren, Sprüh- oder Düsenauftagverfahren aufgetragen wird, oder Kalandrieren. Ebenso wird die Zwischenschicht 11 mittels Haftmittel 4 durch Kaschieren oder Kalandrieren, insbesondere durch Kaschieren, mit der Schottschicht 2 verbunden. Das Aufbringen des Haftmittel 4 und des Haftvermittlers 5 auf der Zwischenschicht 11 erfolgt typischerweise im Pulverstreuverfahren.

Die in Figur 8 gezeigte wasserdichte Membran 1 entspricht im Aufbau und der Herstellung der in Figur 7 gezeigten, mit dem Unterschied, dass die wasserdichte Membran anstelle einer Zwischenschicht 11 zwischen Kontaktschicht 3 und Schottschicht 2 eine weitere Schottschicht 2 und, zwischen Schottschicht 2 der weiteren Schottschicht 2, eine Schicht aus quellfähigem Material, insbesondere Superabsorber, angeordnet ist. Das quellfähige Material ist beidseitig von einer Schottschicht 2 umgeben und mittels Kontaktmittel 4 mit ihnen verbunden. Bei der Herstellung der wasserdichten Membran 1 erfolgt der Verbund des quellfähigen Materials mit der wasserdichten Membran über das Kontaktmittel 4, typischerweise durch Kaschieren oder Kalandrieren, insbesondere durch Kaschieren.

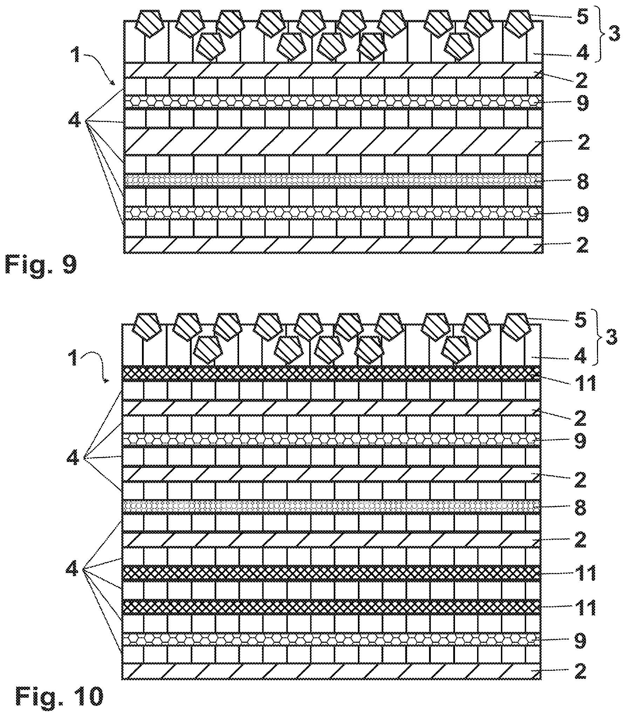

Figur 9 zeigt eine wasserdichte Membran 1 umfassend eine Kontaktschicht 3 entsprechend der in Figur 6 erwähnten Kontaktschicht. Direkt verbunden mit der Kontaktschicht ist eine Schottschicht 2 aus thermoplastischen Polyolefinen oder PVC, insbesondere PP. Daran schliesst sich eine Schicht umfassend elektrisch leitfähige Materialien 9 an, welche beidseitig von Haftmittel 4, typischerweise EVA, umgeben ist. Die Schicht umfassend elektrisch leitfähige Materialien 9 besteht aus einem leitfähig bedruckten Vlies. Darauf folgt eine weitere Schottschicht 2 aus thermoplastischen Polyolefinen oder PVC, gefolgt von einer Schicht aus quellfähigem Material 8, insbesondere Superabsorber, wie in Figur 8 erwähnt. Daran schliesst sich eine weitere Schicht umfassend elektrisch leitfähige Materialien an, bestehend aus einem Gitter aus elektrisch leitfähigem Metall. Auf der der Kontaktschicht 3 abgewandten Seite der wasserdichten Membran 1 ist eine weitere Schottschicht 2 über ein Haftmittel 4, typischerweise EVA, angebracht.

Die Herstellung der wasserdichten Membran 1 erfolgt durch Kaschieren oder Kalandrieren, insbesondere durch Kaschieren.

Die in Figur 10 gezeigte wasserdichte Membran 1 umfasst eine Kontaktschicht 3, wie sie für Figur 9 beschrieben wurde sowie Schottschichten 2 und Schichten aus quellfähigen Materialien 8, wie sie jeweils in Figur 9 beschrieben wurden. Bei den Schichten umfassend elektrisch leitfähige Materialien 9 handelt es sich um Schichten aus Aluminium mit einer Dicke von 0.1 - 0.2 mm.

Die Herstellung der wasserdichten Membran 1 erfolgt typischerweise durch Kaschieren oder Kalandrieren, insbesondere durch Kaschieren.

### Bezugszeichenliste

- 1: Wasserdichte Membran
- 2: Schottschicht
- 3: Kontaktschicht
- 4: Haftmittel
- 5: Kontaktvermittler
- 6: Prägung
- 7: elastische Partikel
- 8: quellfähige Materialien
- 9: elektrisch leitfähige Materialien
- 10: Gleitschicht
- 11: Zwischenschicht
- 12: Untergrund
- 13: Beton
- 14: flüssiger Beton
- 15: Schutzschicht
- 16: Streuer
- 17: Wärmequelle
- 18: Kalander

## Patentansprüche

1. Wasserdichte Membran (1) umfassend:
eine Schottschicht (2),
eine Kontaktschicht (3),
wobei die Kontaktschicht (3) Haftmittel (4) sowie Kontaktvermittler (5) aufweist und wobei das Haftmittel (4) zwischen Kontaktvermittler (5) und Schottschicht (2) angeordnet ist,
**dadurch gekennzeichnet, dass**
die Kontaktschicht (3) auf der Oberfläche der der Schottschicht (2) abgewandten Seite angeordnete elastische Partikel (7) umfasst, welche eine durchschnittliche Grösse von 0.1 - 1200 µm und ein Elastizitätsmodul von 1 - 100 MPa aufweisen.

2. Wasserdichte Membran gemäss Anspruch 1, **dadurch gekennzeichnet, dass** das Haftmittel (4) ein bei Raumtemperatur fester Thermoplast oder ein bei Raumtemperatur festes thermoplastisches Elastomer ist.

3. Wasserdichte Membran gemäss einem der vorhergehenden Ansprüche, **dadurch gekennzeichnet, dass** der Kontaktvermittler (5) mittels Haftmittel (4) anhaftend mit der Schottschicht (2) verbunden ist.

4. Wasserdichte Membran gemäss einem der vorhergehenden Ansprüche, **dadurch gekennzeichnet, dass** die Schottschicht (2) eine Thermoplastschicht, vorzugsweise eine Schicht aus thermoplastischen Polyolefinen oder Polyvinylchlorid (PVC), insbesondere eine Schicht aus Polypropylen (PP) oder Polyethylen (PE), insbesondere bevorzugt aus Polypropylen, aufweist.

5. Wasserdichte Membran gemäss einem der vorhergehenden Ansprüche, **dadurch gekennzeichnet, dass** der Kontaktvermittler (5) an der Oberfläche einer der beiden Flächen der wasserdichten Membran (1) angeordnet ist.

6. Wasserdichte Membran gemäss einem der vorhergehenden Ansprüche, **dadurch gekennzeichnet, dass** der Kontaktvermittler (5) ein poröses Material umfasst.

7. Wasserdichte Membran gemäss einem der vorhergehenden Ansprüche, **dadurch gekennzeichnet, dass** der Kontaktvermittler (5) ein Faserwerkstoff, insbesondere ein Filz oder Vlies umfasst, bevorzugt ein Filz oder Vlies mit einem Flächengewicht von 30 - 200, insbesondere von 50 - 120 g/m².

8. Wasserdichte Membran gemäss einem der vorhergehenden Ansprüche, **dadurch gekennzeichnet, dass** der Kontaktvermittler (5) Betonbestandteile, insbesondere Betonzusatzmittel, umfasst.

9. Wasserdichte Membran gemäss einem der vorhergehenden Ansprüche, **dadurch gekennzeichnet, dass** die wasserdichte Membran (1) mit Wasser quellfähige Materialien (8) aufweist, welche zwischen Kontaktvermittler (5) und Schottschicht (2) angeordnet sind.

10. Wasserdichte Membran gemäss einem der vorhergehenden Ansprüche, **dadurch gekennzeichnet, dass** die wasserdichte Membran (1) elektrisch leitfähige Materialien (9) aufweist, welche zwischen Kontaktvermittler (5) und Schottschicht (2) angeordnet sind.

11. Wasserdichte Membran gemäss einem der vorhergehenden Ansprüche, **dadurch gekennzeichnet, dass** die wasserdichte Membran (1) auf der der Kontaktschicht (3) abgewandten Seite eine Gleitschicht (10) aufweist.

12. Wasserdichte Membran gemäss einem der vorhergehenden Ansprüche, **dadurch gekennzeichnet, dass** zwischen Kontaktvermittler (5) und Schottschicht (2) mindestens eine weitere Schicht angeordnet ist, welche ausgewählt ist aus der Liste bestehend aus Schottschicht (2), Schicht umfassend mit Wasser quellfähiges Material (8), Schicht umfassend elektrisch leitfähiges Material (9) und Schicht umfassend einen Faserwerkstoff, wobei die mindestens eine Schicht beidseitig in Kontakt mit Haftmittel (4) ist.

13. Verfahren zur Abdichtung von Untergründen (12) umfassend die Schritte:
i) Applizieren einer wasserdichten Membran (1) nach einem der Ansprüche 1 - 12 an einen Untergrund (12), wobei der Kontaktvermittler (5) der wasserdichten Membran (1) entgegen dem Untergrund (12) gerichtet ist,
ii) Applizieren von flüssigem Beton (14) auf den Kontaktvermittler (5) der wasserdichten Membran (1).

14. Verfahren zur Herstellung einer wasserdichten Membran (1) gemäss einem der Ansprüche 1 - 12, **dadurch gekennzeichnet, dass** der Kontaktvermittler (5) durch Haftmittel (4) mit der wasserdichten Membran (1) verbunden wird.

15. Verfahren gemäss Anspruch 14, **dadurch gekennzeichnet, dass** die Komponenten der wasserdichten Membran (1) einzig durch Haftmittel (4) miteinander verbunden werden.

## Claims

1. Watertight membrane (1) comprising:
a bulkhead layer (2),
a contact layer (3),
the contact layer (3) comprising coupling agent (4) and contact mediator (5)
and the coupling agent (4) being disposed between contact mediator (5) and bulkhead layer (2),
**characterized in that**
the contact layer (3) comprises elastic particles (7) which are disposed on the surface of the side facing away from the bulkhead layer (2) and which have an average size of 0.1 - 1200 µm and an elasticity modulus of 1 - 100 MPa.

2. Watertight membrane according to Claim 1, **characterized in that** the coupling agent (4) is a thermoplastic which is solid at room temperature or a thermoplastic elastomer which is solid at room temperature.

3. Watertight membrane according to either of the preceding claims, **characterized in that** the contact mediator (5) is joined adheringly by coupling agent (4) to the bulkhead layer (2).

4. Watertight membrane according to any of the preceding claims, **characterized in that** the bulkhead layer (2) comprises a layer of thermoplastic, preferably a layer of thermoplastic polyolefins or polyvinyl chloride (PVC), more particularly a layer of polypropylene (PP) or polyethylene (PE), especially preferably of polypropylene.

5. Watertight membrane according to any of the preceding claims, **characterized in that** the contact mediator (5) is disposed on the surface of one of the two faces of the watertight membrane (1).

6. Watertight membrane according to any of the preceding claims, **characterized in that** the contact mediator (5) comprises a porous material.

7. Watertight membrane according to any of the preceding claims, **characterized in that** the contact mediator (5) comprises a fibre material, more particularly a felt or nonwoven, preferably a felt or nonwoven having a basis weight of 30 - 200, more particularly of 50 - 120 g/m².

8. Watertight membrane according to any of the preceding claims, **characterized in that** the contact mediator (5) comprises concrete constituents, more particularly concrete admixtures.

9. Watertight membrane according to any of the preceding claims, **characterized in that** the watertight membrane (1) comprises water-swellable materials (8) which are disposed between contact mediator (5) and bulkhead layer (2).

10. Watertight membrane according to any of the preceding claims, **characterized in that** the watertight membrane (1) comprises electrically conductive materials (9) which are disposed between contact mediator (5) and bulkhead layer (2).

11. Watertight membrane according to any of the preceding claims, **characterized in that** the watertight membrane (1) comprises a slip layer (10) on the side facing away from the contact layer (3).

12. Watertight membrane according to any of the preceding claims, **characterized in that** disposed between contact mediator (5) and bulkhead layer (2) there is at least one further layer which is selected from the list consisting of bulkhead layer (2), layer comprising water-swellable material (8), layer comprising electrically conductive material (9) and layer comprising a fibre material, the at least one layer being in contact with coupling agent (4) on both sides.

13. Method for sealing substrates (12), comprising the steps of:
i) applying a watertight membrane (1) according to any of claims 1 - 12 to a substrate (12), the contact mediator (5) of the watertight membrane (1) being directed towards the substrate (12), and
ii) applying liquid concrete (14) to the contact mediator (5) of the watertight membrane (1).

14. Method for producing a watertight membrane (1) according to any of claims 1 - 12, **characterized in that** the contact mediator (5) is joined to the watertight membrane (1) by coupling agent (4).

15. Method according to claim 14, **characterized in that** the components of the watertight membrane (1) are joined to one another solely by coupling agent (4).

## Revendications

1. Membrane (1) imperméable à l'eau, comprenant :
une couche étanche (2) :
une couche de contact (3) :
la couche de contact (3) présentant un adhésif (4) ainsi qu'un promoteur de contact (5) et l'adhésif (4) étant disposé entre le promoteur de contact (5) et la couche étanche (2), **caractérisée en ce que** la couche de contact (3) comprend des particules (7) élastiques, disposées sur la surface du côté opposé à la couche étanche (2), qui présentent une grosseur moyenne de 0,1-1200 µm et un module d'élasticité de 1-100 MPa.

2. Membrane imperméable à l'eau selon la revendication 1, **caractérisée en ce que** l'adhésif (4) est un thermoplastique solide à température ambiante ou un élastomère thermoplastique solide à température ambiante.

3. Membrane imperméable à l'eau selon l'une quelconque des revendications précédentes, **caractérisée en ce que** le promoteur de contact (5) est assemblé par collage au moyen d'un adhésif (4) à la couche étanche (2) .

4. Membrane imperméable à l'eau selon l'une quelconque des revendications précédentes, **caractérisée en ce que** la couche étanche (2) est une couche thermoplastique, de préférence une couche en polyoléfines thermoplastiques ou en poly(chlorure de vinyle) (PVC) thermoplastique, en particulier une couche en polypropylène (PP) ou en polyéthylène (PE), en particulier de préférence en polypropylène.

5. Membrane imperméable à l'eau selon l'une quelconque des revendications précédentes, **caractérisée en ce que** le promoteur de contact (5) est disposé sur la surface d'une des deux faces de la membrane (1) imperméable à l'eau.

6. Membrane imperméable à l'eau selon l'une quelconque des revendications précédentes, **caractérisée en ce que** le promoteur de contact (5) comprend un matériau poreux.

7. Membrane imperméable à l'eau selon l'une quelconque des revendications précédentes, **caractérisée en ce que** le promoteur de contact (5) comprend un matériau fibreux, en particulier un feutre ou un non-tissé, de préférence un feutre ou un non-tissé présentant un poids surfacique de 30-200, en particulier de 50-120 g/m².

8. Membrane imperméable à l'eau selon l'une quelconque des revendications précédentes, **caractérisée en ce que** le promoteur de contact (5) comprend des constituants du béton, en particulier des additifs pour béton.

9. Membrane imperméable à l'eau selon l'une quelconque des revendications précédentes, **caractérisée en ce que** la membrane (1) imperméable à l'eau présente des matériaux (8) pouvant être gonflés à l'eau, qui sont disposés entre le promoteur de contact (5) et la couche étanche (2).

10. Membrane imperméable à l'eau selon l'une quelconque des revendications précédentes, **caractérisée en ce que** la membrane (1) imperméable à l'eau présente des matériaux (9) électriquement conducteurs, qui sont disposés entre le promoteur de contact (5) et la couche étanche (2).

11. Membrane imperméable à l'eau selon l'une quelconque des revendications précédentes, **caractérisée en ce que** la membrane (1) imperméable à l'eau présente une couche de glissement (10) sur le côté opposé à la couche de contact (3).

12. Membrane imperméable à l'eau selon l'une quelconque des revendications précédentes, **caractérisée en ce qu'**au moins une autre couche est disposée entre le promoteur de contact (5) et la couche étanche (2), choisie dans la liste constituée par une couche étanche (2), une couche comprenant un matériau (8) pouvant être gonflé à l'eau, une couche comprenant un matériau (9) électriquement conducteur et une couche comprenant un matériau fibreux, ladite au moins une couche étant en contact sur les deux côtés avec un adhésif (4).

13. Procédé pour l'étanchéification de substrats (12) comprenant les étapes :
i) application d'une membrane (1) imperméable à l'eau selon l'une quelconque des revendications 1-12 sur un substrat (12), le promoteur de contact (5) de la membrane (1) étanche à l'eau étant orienté à l'opposé du substrat (12),
ii) application de béton liquide (14) sur le promoteur de contact (5) de la membrane (1) imperméable à l'eau.

14. Procédé pour la fabrication d'une membrane (1) imperméable à l'eau selon l'une quelconque des revendications 1-12, **caractérisé en ce que** le promoteur de contact (5) est assemblé par un adhésif (4) à la membrane (1) imperméable à l'eau.

15. Procédé selon la revendication 14, **caractérisé en ce que** les composants de la membrane (1) imperméable à l'eau sont uniquement assemblés les uns aux autres au moyen d'un adhésif (4).
